# EUROPÄISCHE PATENTANMELDUNG

(11) **EP 1 063 576 A2**
(43) Veröffentlichungstag der Anmeldung: **27.12.2000**
(21) Anmeldenummer: 00111495.8
(22) Anmeldetag: 29.05.2000
(51) Int. Cl.: G05B 19/042, B60R 25/00

(54) **Steuersystem für elektrisch betriebene Funktionseinheiten in Kraftfahrzeugen**

(30) Priorität: 27.05.1999 DE 19924301
(71) Anmelder: MEKRA Lang GmbH & Co. KG, 90765 Fürth (DE)
(72) Erfinder: Lang, Heinrich, 91465 Ergersheim (DE); Seiboth, Wolfgang, 91438 Bad Windsheim (DE)
(74) Vertreter: Winter, Brandl, Fürniss, Hübner, Röss, Kaiser, Polte Partnerschaft

(57) **Zusammenfassung**

Es wird ein Steuersystem für elektrisch betriebene Funktionseinheiten in Kraftfahrzeugen, wie insbesondere Zentralveriegelung, Fensterheber, Außenspiegel und der gleichen bereitgestellt, das ein Bedienteil und eine Mehrzahl von mit diesem Bedienteil verbundenen Steuergeräten umfaßt. Dadurch, daß ein Bedienteil mehreren Steuergeräten zugeordnet ist, können mit nur einem Bedienteil, das an zentraler Stelle, ergonomisch günstig angeordnet ist, eine Vielzahl von elektrisch betriebenen Funktionseinheiten im Kraftfahrzeug bedient, aktiviert und gesteuert werden.

## Beschreibung

Die Erfindung betrifft ein Steuersystem für elektrisch betriebene Funktionseinheiten in Kraftfahrzeugen, wie Zentralverriegelung, Fensterheber, Außenspiegelverstellung und dergleichen.

In Kraftfahrzeugen, sowohl in Nutzfahrzeugen als auch in Personenkraftwagen, sind immer mehr elektrisch betätigbare Funktionseinheiten, wie Zentralverriegelung, elektrische Fensterheber, verstellbare Außenspiegel, Schiebedach und dergleichen vorzufinden. Die sinnvolle Verbindung und Verschaltung dieser einzelnen Funktionseinheiten und der dazugehörigen Bedienelemente stellt eine Herausforderung an die Verkabelung dar. Um "Kabelsalat" zu vermeiden, wird dazu übergegangen, die Ansteuerung der einzelnen Elemente über genormte Busleitungen vorzunehmen.

Aus dem Bereich von Nutzfahrzeugen ist es bekannt, sogenannte Türmodule vorzusehen, die aus einem Bedienteil und einem Türsteuergerät bestehen, in denen die Bedienfunktionen für elektrisch verstellbaren Außenspiegel, elektrische Fensterheber und dergleichen zusammengefaßt sind. Hierbei wird das Türsteuergerät im Türhohlraum untergebracht und das mit einem Kabel mit dem Türsteuergerät verbundene Bedienteil ist an der Innenseite der Tür zugänglich angeordnet. Die strenge Zuordnung von Bedienteil zu Steuergerät schränkt die Flexibilität eines derartigen Steuersystems ein.

Es ist daher Aufgabe der vorliegenden Erfindung, ein derartiges Steuersystem so weiterzubilden, daß damit ein flexiblerer Einsatz in Kraftfahrzeugen möglich ist.

Die Lösung dieser Aufgabe erfolgt durch die Merkmale des Anspruchs 1.

Dadurch, daß ein Bedienteil mehreren Steuergeräten zugeordnet ist, können mit nur einem Bedienteil, das an zentraler Stelle, ergonomisch günstig angeordnet ist, eine Vielzahl von elektrisch betriebenen Funktionseinheiten im Kraftfahrzeug bedient, aktiviert und gesteuert werden. In den zugeordneten Steuergeräten lassen sich Funktionseinheiten entsprechend den jeweiligen technischen Gegebenheiten gruppieren. Beispielsweise lassen sich jeweils ähnliche Funktionseinheiten in einem gemeinsamen Steuergerät zusammenfassen. Auch ist es möglich, Funktionseinheiten, die komplexere Anforderungen an das Steuergerät stellen, in einem eigenen Steuergerät unterzubringen. Weiterhin kann die Anzahl der Steuergeräte hinsichtlich des Platzbedarfs und des Platzangebots im Kraftfahrzeug hin optimiert bzw. ausgelegt werden. Das Bedienteil kann sowohl im Fahrzeuginneren als auch außen am Fahrzeug angebracht werden. Durch die funktionale Dreiteilung des Gesamtsystems in Bedienteil, Steuergeräte und Funktionseinheiten wird ein Höchstmaß an Flexibilität erreicht. Alle drei Komponenten lassen sich räumlich getrennt voneinander entsprechend den jeweiligen räumlichen Gegebenheiten im Fahrzeug unterbringen. Ein Steuergerät kann einer einzigen Funktionseinheit oder mehreren Funktionseinheiten zugeordnet sein. Durch die Aufspaltung in Funkionseinheit und Steuergerät wird erreicht, daß eine Vielzahl von unterschiedlichsten Funktionseinheiten mit einem Bedienteil bedient und aktiviert werden können. Das jeweilige Steuergerät "übersetzt" quasi die standardisierten Steuerbefehle aus dem Bedienteil in die spezifischen Steuersignale der jeweiligen Funktionseinheit.

Die Verbindung zwischen Bedienteil und den Steuergeräten kann mittels Kabel in Form von elektrischen Leiterkabeln oder auch in Form von Glasfaserkabeln erfolgen. Gemäß einer besonders bevorzugten Ausgestaltung der Erfindung erfolgt die Kommunikation bzw. Verbindung zwischen Bedienteil und den Steuergeräten drahtlos, z.B. über Funk und insbesondere über Infrarot. Durch die drahtlose Verbindung zwischen Bedienteil und den Steuergeräten kann das Bedienteil durch den Fahrer an beliebiger Stelle angeordnet werden, wie es seinen persönlichen Vorlieben entspricht. Darüber hinaus kann das Bedienteil auch mitgeführt werden, wodurch auf einfache Weise eine Diebstahlsicherung realisiert werden kann.

Gemäß einer bevorzugten Ausführung der Erfindung erfolgt die Verbindung bzw. Kommunikation zwischen dem Bedienteil und den Steuergeräten mittels eines gerichteten Infrarotstrahls, d.h. der Fahrer muß das Bedienteil auf das jeweilige Steuergerät bzw. auf den Infrarotempfänger des Steuergeräts richten. Dies ergibt eine ergonomische Bedienung, da der Fahrer das jeweilige Steuergerät anvisieren muß.

Gemäß einer weiteren bevorzugten Ausführungsform der Erfindung läßt sich das Bedienteil von dem Steuergerät abnehmen und im Falle der drahtlosen Kommunikation durch den Fahrer mitführen. Darüber hinaus läßt sich bei geeigneter Ausgestaltung des Bedienteils dieses an beliebiger Stelle im Fahrzeug befestigen.

Gemäß einer weiteren bevorzugten Ausgestaltung der Erfindung ist eine Mehrzahl von Bedienteilen vorgesehen. Damit kann beispielsweise ein Bedienteil am Schlüsselbund verbleiben, wodurch die Zentralverriegelung und auch andere Funktionseinheiten von außen betätigbar sind. Ein weiteres Bedienteil ist an zentraler, ergonomisch günstiger Stelle im Fahrzeuginneren angeordnet. Auch ist es hierbei möglich, daß unterschiedliche Fahrer, die ein und dasselbe Fahrzeug benutzen, jeweils ihr eigenes Bedienteil bekommen. Hierbei ist es dann auch möglich, bestimmte persönliche Voreinstellungen in dem Bedienteil abzuspeichern, z.B. kann die Memory-Funktion der Sitzanordnung für den jeweiligen Fahrer in seinem ihm zugeordneten Bedienteil abgespeichert sein.

Gemäß einer weiteren Ausgestaltung der Erfindung ist das Bedienteil in Hauptbedienteil und Unterbedienteil aufgeteilt. Auf diese Weise lassen sich die Bedienung von Funktionseinheiten, die von außen nicht bedient werden müssen, z.B. elektrische Fensterheber etc. und Funktionseinheiten, die von außen bedient werden sollen, z.B. Zentralverriegelung, trennen, was eine kompaktere Bauform des Unterbedienteils ermöglicht.

Durch das flexibel gestaltete erfindungsgemäße Steuersystem ist es z.B. möglich, einen elektrisch betätigten Türschließmechanismus zu realisieren. Das mitgeführte Bedienteil oder Unterbedienteil dient in an sich bekannter Weise als Infrarotschlüssel zum Betätigen der Zentralverriegelung. Über das gleiche Betätigungselement oder auch über ein anderes Betätigungselement am Bedienteil wird ein elektrisch betätigter Schließmechanismus zum Öffnen bzw. Schließen der Türe betätigt. Damit kann ein mechanisch von Hand betätigter Türschließ- bzw. -öffnungsmechanismus eingespart werden, was erhebliche Kostenvorteile zur Folge hat. Das Bedienelement für den Türschließ- bzw. -öffnungsmechanismus kann auch von außen zugänglich an gewohnter Stelle an der Fahrzeugtür angeordnet sein.

Die übrigen Unteransprüche beziehen sich auf weitere vorteilhafte Ausgestaltungen der Erfindungen.

Weitere Einzelheiten, Merkmale und Vorteile der Erfindung ergeben sich aus der nachfolgenden Beschreibung bevorzugter Ausführungsformen anhand der Zeichnung.

Es zeigt:
Fig. 1 eine schematische Darstellung einer ersten Ausführungsform der Erfindung, bei der das Bedienteil lösbar an dem Steuergerät befestigbar ist und die Kommunikation bzw. Verbindung zwischen dem Bedienteil und Steuergerät mittels Infrarot oder mittels Steckverbindung erfolgt;
Fig. 2 eine beispielhafte Ausgestaltung der optischen Symbole auf dem Bedienteil für die jeweilige Funktionseinheit;
Fig. 3 eine zweite Ausführungsform der Erfindung, bei der das Bedienteil mittels Kabel mit den Steuergeräten verbunden ist;
Fig. 4 eine dritte Ausführungsform der Erfindung bei der ein Teil der Bedienungselement fest in den Steuergeräten integriert sind; und
Fig. 5 eine vierte Ausführungsform der Erfindung, bei der das Bedienteil in ein Hauptbedienteil und ein Unterbedienteil aufgespalten ist.

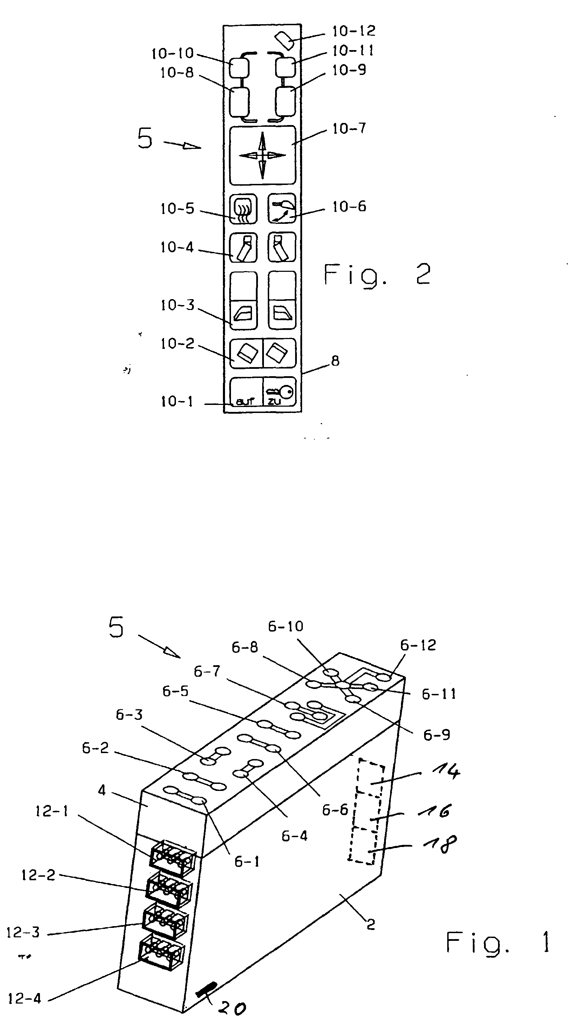

Fig. 1 zeigt eine erste Ausführungsform des erfindungsgemäßen Steuersystems mit einem Steuergerät 2 und einem darauf aufgesteckten Bedienteil 4. Sowohl das Stuergerät 2 als auch das Bedienteil 4 sind quaderförmig ausgebildet, so daß sie zueinander passen und zusammen wieder eine quaderförmige Struktur ergeben. Die Oberseite des Bedienteils 4, die Seite, die vom Steuergerät 2 abgewandt ist, ist als Folientastatur 5 ausgebildet. Die Folientastatur 5 umfaßt eine Mehrzahl von Druck- und/oder Wippschaltern 6-i, die von einer auswechselbaren Abdeckfolie 8 mit den jeweiligen Schalter 6-i zugeordneten Symbolen 10-i versehen sind. In Fig. 2 sind beispielhaft Symbole 10-i gezeigt, die auf den zugeordneten Schaltern 6-i zu liegen kommen. Die Symbole 10-i haben folgende Bedeutung bzw. die zugeordneten Schalter 6-i schalten und steuern folgende Funktionseinheiten:

| | | |
|---|---|---|
| 10-1, | 6-1 | Türverriegelung, |
| 10-2, | 6-2 | Schiebedach, |
| 10-3, | 6-3 | elektrischen Fensterheber, |
| 10-4, | 6-4 | automatischen Spiegelnachstellung bei Kurvenfahrten, |
| 10-5, | 6-5 | Spiegelheizung, |
| 10-6, | 6-6 | Abklappmechanismus für die Außenspiegel, |
| 10-7, | 6-7 | Spiegelverstellung, |
| 10-8, | 6-8 | Wahlschalter für den Hauptspiegel links, |
| 10-9, | 6-9 | Wahlschalter für den Hauptspiegel rechts, |
| 10-10, | 6-10 | Wahlschalter für den Weitwinkelspiegel links, |
| 10-11, | 6-11 | Wahlschalter für den Weitwinkelspiegel rechts, |
| 10-12, | 6-12 | Wahlschalter für den Rampenspiegel. |

Die Ausgestaltung der Symbole und auch die Aufteilung der Symbole auf der Abdeckfolie 8 gemäß Fig. 2 bzw. die Aufteilung und Anordnung der Schalter 6 auf der Oberseite des Bedienteils 4 ist natürlich nur beispielhaft und kann den jeweiligen Erfordernissen angepaßt werden.

In dem Steuergerät 2 sind nicht näher dargestellte Einschübe für die jeweilige Funktionseinheit vorgesehen, die über eine entsprechende Anschlußeinrichtung 12-i von außen zugänglich sind und mittels Kabel mit der zugehörigen Funktionseinheit verbindbar sind. In Fig. 2 sind beispielhaft Anschlußeinrichtungen 12-1 für den Spiegelbus eines Rampenspiegels, 12-2 ein Anschluß für den Spiegelbus zu Haupt- und Weitwinkelspiegel, 12-3 Anschluß Fensterheber und 12-4 Anschluß Türverriegelung gezeigt. Die Anschlußeinrichtungen 12-i sind vorzugsweise an einer Schmalseite des Steuergeräts 2 angeornet. An der gegenüberliegenden Schmalseite des Steuergeräts 2 ist eine Diagnoseschnittstelle 14, ein Anschluß für einen Fahrzeug-CAN-Bus 16 und ein Anschluß 18 für die Stromversorgung vorgesehen. Das Bezugszeichen 20 bezeichnet einen Wasserablauf, der notwendig ist falls das Steuergerät 2 im Türinnenraum, der als Feuchtraum gilt, angeordnet wird.

Ein zweites Steuergerät, das z.B. in der Beifahrertür angeordnet wird, ist nicht näher dargestellt, weist jedoch den gleichen Aufbau auf, wie das vorstehend beschrieben Steuergerät 2.

Das Bedienteil 4 ist lösbar mittels einer Steckverbindung mit dem Steuergeräten 2 verbindbar und die Kommunikation bzw. Verbindung zwischen Bedienteil 4 und den beiden Steuergeräten 2 erfolgt im aufgesteckten zustand durch die Steckverbindung und im abgenommenen Zustand mittels Infrarot.

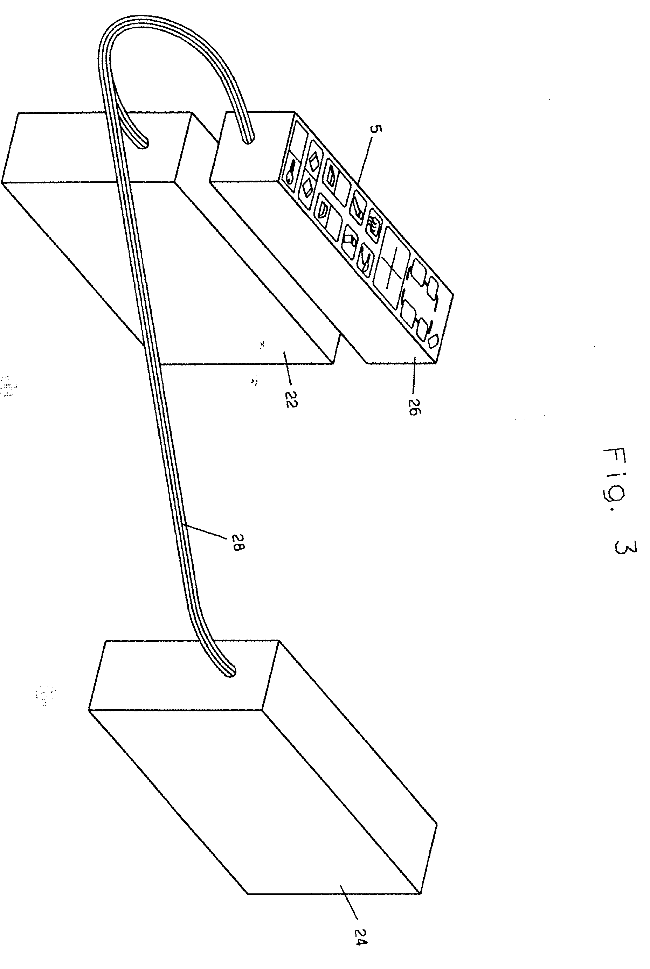

Fig. 3 zeigt eine zweite Ausführungsform der Erfindung mit einem ersten Steuergerät 22 und einem zweiten Steuergerät 24 und einem gemeinsamen Bedienteil 26. Das Bedienteil 26 ist lösbar mit dem ersten Steuergerät 22 oder 24 verbindbar und die Kommunikation bzw. Verbindung zwischen Bedienteil 26 und den beiden Steuergeräten 22 und 24 erfolgt mittels eines Kabels 28. Im übrigen entspricht die zweite Ausführungsform der ersten Ausführungsform.

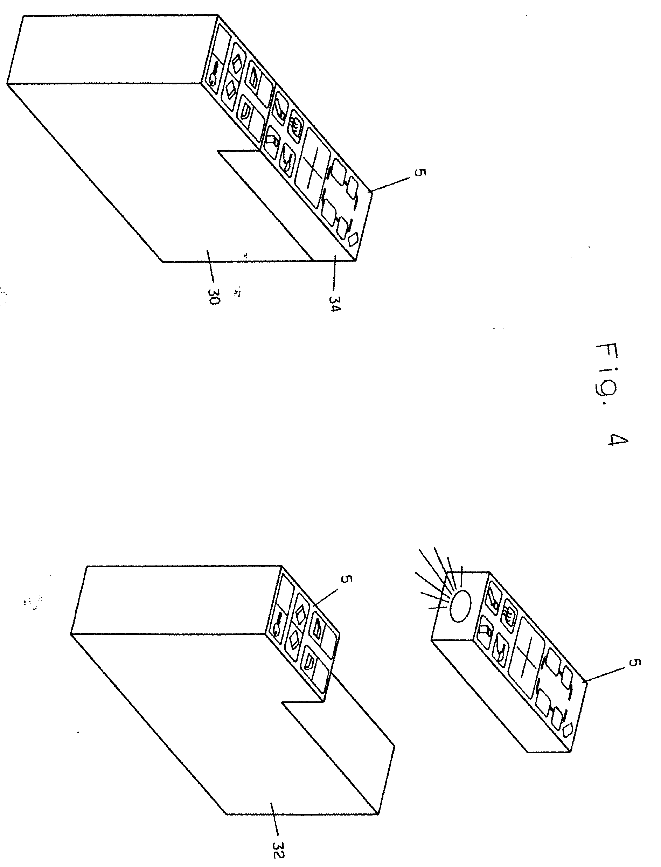

Fig. 4 zeigt eine dritte Ausführungsform der Erfindung mit einem ersten, fahrerseitigen Steuergerät 30 und einem zweiten, beifahrerseitigen Steuergerät 32 und zwei gemeinsamen Bedienteilen 34 und 35. Die Bedienteile 34 und 35 sind lösbar mit dem ersten oder zweiten Steuergerät 30 oder 32 verbindbar und die Kommunikation bzw. Verbindung zwischen Bedienteil 34, 35 und den beiden Steuergeräten 32 und 30 erfolgt mittels Infrarotverbindung.

Im Unterschied zur ersten und zweiten Ausführungsform sind die Bedienelemente für Türverriegelung 6-1, Schiebedach 6-2 und Fensterheber 6-3 an der Oberseite der beiden Steuergeräte 30 und 32 angeordnet, während die übrigen Bedienelemente 6-4 bis 6-12 in dem Bedienteil 34 angeordnet sind. Es kann natürlich auch eine andere Aufteilung gewählt werden, z.B. kann die Funktion des Fensterhebers 6-3 noch in das Bedienteil 34 integriert werden.

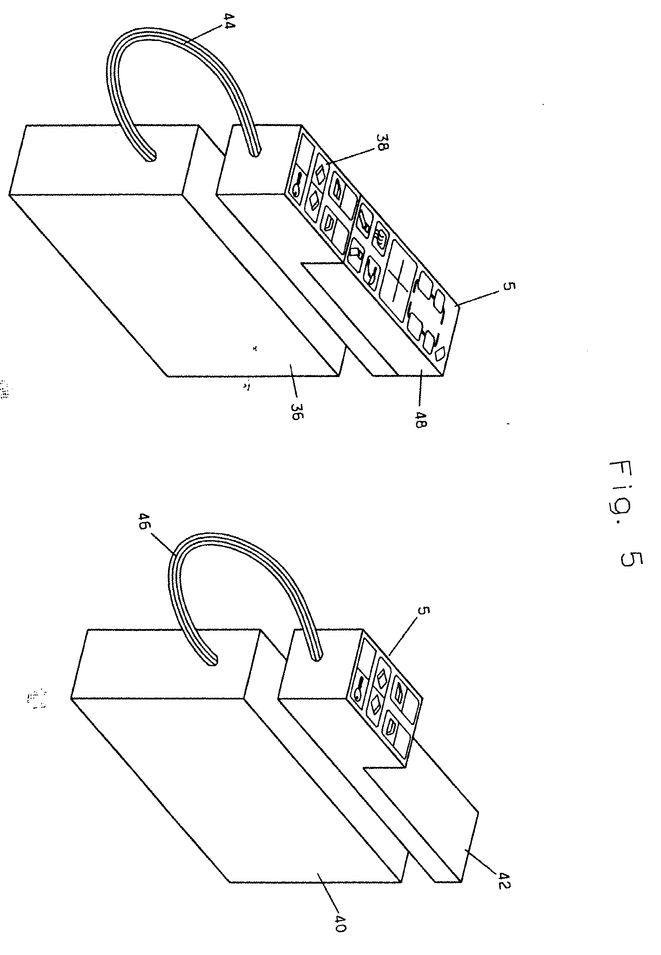

Fig. 5 zeigt eine vierte Ausführungsform der Erfindung mit einem ersten Steuergerät 36, einem ersten Hauptbedienteil 38, einem zweiten Steuergerät 40 und einem zweiten Hauptbedienteil 42. Die beiden Hauptbedienteile 38 und 42 sind mittels eines Kabels 44 bzw. 46 mit dem jeweiligen Steuergerät 36 bzw. 40 verbunden. Mit den beiden Hauptbedienteilen 38 und 42 läßt sich eines oderer mehrere Unterbedienteile 48 mittels Infrarotverbindung verbindung. Das oder die Unterbedienteile 38 ist lösbar an dem jeweiligen Hauptbedienteil 38 oder 42 befestigt und steht mit dem Hauptbedienteil mittels Infrarot in Verbindung. Die Aufteilung der Funktionseinheiten zwischen Unterbedienteil 48 und den beiden Hauptbedienteil 38 und 42 entspricht der Aufteilung zwischen Steuergerät 30, 32 und Bedienteil 34 in der Ausführungsform gemäß Fig. 3.

Die Kabel 28, 44 und 46 können elektrische Leiter und/oder auch Lichtleiter sein.

### Bezugszeichenliste:

- 2: Steuergerät
- 4: Bedienteil
- 5: Folientastatur
- 6-i: Bedienungselemente
- 6-1: Türverriegelung
- 6-2: Schiebedach
- 6-3: Fensterheber
- 6-4: Memoryfunktion für automatische Spiegelnachstellung
- 6-5: Spiegelheizung
- 6-6: Spiegelabklappmechanismus
- 6-7: Spiegelverstellung
- 6-8: Wahlschalter Hauptspiegel rechts
- 6-9: Wahlschalter Hauptspiegel links
- 6-10: Wahlschalter Weitwinkelspiegel rechts
- 6-11: Wahlschalter Weitwinkelspiegel links
- 6-12: Wahlschalter Rampenspiegel
- 8: Abdeckfolie
- 10-i: Symbole für Funktionseinheiten
- 12-i: Anschlußeinrichtung am Steuergerät
- 12-1: Anschluß Spiegelbus Rampenspiegel
- 12-2: Anschluß Spiegelbus Haupt- und Weitwinkelspiegel
- 12-3: Anschluß Fensterheber
- 12-4: Anschluß Türverriegelung
- 14: Diagnoseschnittstelle
- 16: Anschluß Fahrzeug-LAN-Bus
- 18: Anschluß Stromversorgung
- 20: Wasserablauf

### Fig. 3:

- 22: erstes Steuergerät
- 24: zweites Steuergerät
- 26: Bedienteil
- 28: Kabel

### Fig. 4:

- 30: erstes Steuergerät
- 32: zweites Steuergerät
- 34: erstes Bedienteil
- 35: zweites Bedienteil

### Fig. 5:

- 36: erstes Steuergerät
- 38: erstes Hauptbedienteil
- 40: zweites Steuergerät
- 42: zweites Hauptbedienteil
- 44: Kabel zwischen 36 und 38
- 46: Kabel zwischen 40 und 42
- 48: Unterbedienteil
- 38: zweites Steuergerät

## Patentansprüche

1. Steuersystem für elektrisch betriebene Funktionseinheiten in Kraftfahrzeugen, wie insbesondere Zentralverriegelung, Fensterheber, Außenspiegel und dergleichen, mit einem Bedienteil (4; 26; 34, 35; 38, 42, 48) und einer Mehrzahl von mit dem Bedienteil (4; 26; 34, 35; 38, 42, 48) verbundenen Steuergeräten (2; 22, 24; 30, 32; 36, 40) zum Aktivieren und Steuern von elektrisch betriebenen Funktionseinheiten in einem Kraftfahrzeug, wobei die Steuergeräte wiederum funktional mit den jeweiligen Funktionseinheiten verbindbar sind.

2. Steuersystem nach Anspruch 1, dadurch gekennzeichnet, daß das Bedienteil (26; 34; 38, 42) mittels Kabel und/oder Lichtleiter (28; 44, 46) mit den Steuergeräten (22, 24; 36, 40) verbunden ist.

3. Steuersystem nach Anspruch 1, dadurch gekennzeichnet, daß das Bedienteil (4; 34, 35; 48) drahtlos mit den Steuergeräten (2; 30, 32) verbunden ist.

4. Steuersystem nach Anspruch 3, dadurch gekennzeichnet, daß das Bedienteil (4; 34, 35; 38) mittels eines gerichteten Infrarotsignals mit den Steuergeräten (2; 22, 24; 36,40) verbunden ist.

5. Steuersystem nach einem der vorhergehenden Ansprüche, dadurch gekennzeichnet, daß das Bedienteil (4; 26; 34, 35; 38, 42, 48) an wenigstens einem der Steuergeräte (2; 22, 24; 30, 32; 36, 40) lösbar befestigbar ist.

6. Steuersystem nach einem der vorhergehenden Ansprüche, dadurch gekennzeichnet, daß das Bedienteil (4; 26; 34, 35; 38, 42, 48) an zentraler Stelle im Griffbereich des Fahrers in dem Fahrzeug lösbar angeordnet ist.

7. Steuersystem nach einem der vorhergehenden Ansprüche, dadurch gekennzeichnet, daß die Steuergeräte (2; 22, 24; 30, 32; 36, 40) in der Nähe der jeweiligen Funktionseinheiten angeordnet sind.

8. Steuersystem nach einem der vorhergehenden Ansprüche, dadurch gekennzeichnet, daß ein Steuergerät (2; 22, 24; 30, 32; 36, 40) zur Steuerung einer Mehrzahl von Funktionseinheiten ausgelegt ist.

9. Steuersystem nach einem der vorhergehenden Ansprüche, dadurch gekennzeichnet, daß eine Mehrzahl von Bedienteilen (34, 35; 38, 48, 42) mit einem Steuergerät (30, 32; 36, 40) verbunden sind.

10. Steuersystem nach Anspruch 9, dadurch gekennzeichnet, daß Bedienteil ein Hauptbedienteil (38, 42) und ein Unterbedienteil (38) aufweist, wobei das Hauptbedienteil (38, 42) mit den Steuergeräten (36, 40) verbunden ist und wobei das Unterbedienteil (48) lösbar an dem Hauptbedienteil (38, 42) befestibar ist und zur Betätigung einer Funktionseinheit drahtlos mit dem Hauptbedienteil (38, 42) und/oder dem jeweiligen Steuergerät (36, 40) direkt in Verbindung steht.

11. Steuersystem nach einem der vorhergehenden Ansprüche, dadurch gekennzeichnet, daß das Bedienteil (4; 26; 34, 35; 38, 42, 48) als Folientastatur (5) ausgebildet ist, die mittels Druck betätigbare Bedienelemente (6-i) und eine Abdeckfolie (8) mit entsprechendem Symbolen (10-i) umfaßt.

12. Elektrisch betriebene Türschließvorrichtung mit einem elektrisch betriebenen Türschließmechanismus der mittels eines Steuersystems nach einem der vorhergehenden Ansprüche angesteuert ist.
